(19) Europäisches Patentamt

European Patent Office

Office européen des brevets

(11) **EP 1 684 106 A2**

(12) **EUROPEAN PATENT APPLICATION**

(43) Date of publication:
26.07.2006 Bulletin 2006/30

(51) Int Cl.:
*G02B 21/18* (2006.01)          *G02B 21/16* (2006.01)
*G02B 21/33* (2006.01)          *G02B 21/10* (2006.01)

(21) Application number: 06005277.6

(22) Date of filing: 03.12.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **01.12.2000 US 250800 P**

(62) Document number(s) of the earlier application(s) in accordance with Art. 76 EPC:
**01997041.7 / 1 384 103**

(71) Applicant: **Auburn University**
**Auburn University, AL 36849-5176 (US)**

(72) Inventors:
• **Vodyanoy, Vitaly, J.**
**Alabama 36832-6766 (US)**
• **Neely, William, Charles**
**Alabama 36830-5409 (US)**

(74) Representative: **Chettle, Adrian John et al**
**Withers & Rogers LLP**
**Goldings House,**
**2 Hays Lane**
**London SE1 2HW (GB)**

Remarks:
This application was filed on 15 - 03 - 2006 as a divisional application to the application mentioned under INID code 62.

(54) **High-resolution optical microscope**

(57)     A direct-view optical microscope system is provided which uses high-energy light from a phenomenon known as non-resonant Raman scattering to illuminate a living biological specimen. One embodiment of the system combines two discrete light sources to form a combined incident light source for the microscope. The system includes a method and apparatus for modulating the intensity of the scattered light when two light waves are combined to produce the incident light. By varying the frequency of the two source light waves, the intensity of the combined Raman-scattered light can be modulated to achieve finer resolution.

EP 1 684 106 A2

**Description**

**Technical Field**

The present invention relates generally to the field of direct-view optical microscopes and, more particularly, to a method and apparatus for using high-energy light from a phenomenon known as non-resonant Raman scattering to illuminate a living biological specimen.

**Background of the Invention**

Since their invention in the late 1500s, light microscopes have enhanced our knowledge of basic biology, biomedical research, medical diagnostics, and materials science. Although the science of microscopy has advanced to include a variety of techniques to enhance resolution, the fine-resolution observation of living biological specimens has remained elusive.

Continuing advances in microbiology require a closer and closer study of biochemical events that occur on a cellular and intracellular level. The challenge in microscopy today is not only the enhancement of finer and finer resolution, but also the development of techniques for observing biochemical events in real time, as they happen, without destroying the biological specimen in the process.

Resolution is the ability of a microscope to distinguish between two objects that are very close together. A microscope with a resolution of 1,000 Å (1,000 Angstroms; equal to 100 nanometers or $100 \times 10^{-9}$ meters), for example, can make objects as close together as 100 nanometers independently visible. Objects and features smaller than 100 nanometers cannot be resolved (*i.e.,* distinguished) by this microscope. Below is a list of the resolution or practical resolving power of several types of microscopes currently available:

| | |
|---|---|
| 2,000 Å | Visible Light Microscope |
| 1,000 Å | Ultraviolet Microscope |
| 150 to 300 Å | Scanning Electron Microscope |
| 2.0 to 4.0 Å | Transmission Electron Microscope |

Although electron microscopes offer very fine resolution, the specimen must be prepared by high-vacuum dehydration and is subjected to intense heat by the electron beam, making observation of living specimens impossible. The dehydration process also alters the specimen, leaving artifacts and cell damage that were not present in nature. Also, In order to view the steps in a biological process, dozens of specimens must be viewed at various stages in order to capture each desired step in the process. The selected specimens must then be prepared. Specimen preparation can take up to two hours each.

The high cost of an electron microscope represents another barrier to its use in the life sciences. Electron microscopes are large and often require an entire room. The operation and adjustment of an electron microscope requires highly-skilled technicians, introducing yet another cost of maintaining and staffing an electron microscopy facility.

The ultraviolet microscope offers finer resolution and better magnification than an ordinary light microscope, but it has serious disadvantages for the study of living specimens. Ultraviolet light damages or kills many kinds of living biological specimens, making observation impossible.

When ultraviolet light strikes a specimen, it excites fluorescence within the molecules of the specimen so that the specimen itself emits a fluorescent light. If the specimen does not produce fluorescence naturally, it must be stained with a fluorescent dye. Many fluorescent dyes bind strongly to elements such as enzymes within living cells, changing their qualities and significantly altering the cellular biochemistry. Other dyes produce too much fluorescence or absorb too much of the ultraviolet light to be useful.

Like electron microscopes, the operation of an ultraviolet microscope requires a great deal of skill. Because ultraviolet light damages the human eye, the image can only be observed by ultraviolet video cameras or specially-equipped still cameras. Also, the quartz optics required for ultraviolet microscopes are much more expensive than the glass components used in visible light microscopes.

The electron and ultraviolet microscopes available today do no offer a technique for observing living, unaltered biological specimens in real time.

The Nature of Light

Light is sometimes referred to as a type of electromagnetic radiation because a light wave consists of energy in the form of both electric and magnetic fields. In addition to the light we can see, the electromagnetic spectrum includes radio waves, microwaves, and infrared light at frequencies lower than visible light. At the upper end of the spectrum, ultraviolet radiation, x-rays, and gamma rays travel at frequencies faster than visible light.

Wavelength is the distance between any two corresponding points on successive light waves. Wavelength is measured in units of distance, usually billionths of a meter. The human eye can see wavelengths between 400 and 700 billionths of a meter. Frequency is the number of waves that pass a point in space during any time interval, usually one second. Frequency is measured in units of waves per second, or Hertz (Hz). The frequency of visible light is referred to as color. For example, light traveling at 430 trillion Hz is seen as the color red.

The wavelength of light is related to the frequency by this simple equation (Equation One),

$$f = \frac{c}{L},$$

where c is the speed of light in a vacuum (299,792,458 meters per second), f is the frequency in Hz, and L is the wavelength in meters.

Microscope Resolution

The resolution or resolving power of a light microscope can be calculated using Abbe's Formula,

$$D = \frac{L}{2(NA)},$$

where D is the resolving power of a microscope in meters, L is the wavelength in meters of the light source, and NA is the numerical aperture of the microscope. The numerical aperture, generally, indicates the angle at which light strikes the specimen being viewed.

Light Scattering

When a light wave passes through a specimen, most of the light continues in its original direction, but a small fraction of the light is scattered in other directions. The light used to illuminate the specimen is called the incident light. The scattering of incident light through various specimens was studied by Lord John William Strutt, the third Baron Rayleigh (Lord Rayleigh) in the late 1800s and later by Albert Einstein and others.

Lord Rayleigh observed that a fraction of the scattered light emerges at the same wavelength as the incident light. Because of his observation, light that is scattered at the same wavelength as the incident light is a phenomenon called Rayleigh scattering (also called resonant scattering or elastic light scattering).

In 1922, Arthur H. Compton observed that some of the scattered light has a different wavelength from the incident light. Compton discovered that, when light passes through a specimen, some of the light scatters off the electrons of the specimen molecules, producing scattered light in the X-ray region of the spectrum.

Raman Scattering

In 1928, Professor Chandrasekhara V. Raman and Professor K.S. Krishnan discovered that the scattered light observed by Compton was caused by vibrations within the molecules of the specimen. Because of his discovery, light that is scattered due to vibrations within the molecules of a specimen is a phenomenon called Raman scattering (also called non-resonant or inelastic light scattering). In 1930, Raman received the Nobel Prize in Physics for his discovery.

When a specimen is bombarded with incident light, energy is exchanged between the light and the molecules of the specimen. The molecules vibrate, producing the phenomenon known as Raman scattering. The molecular vibrations cause the specimen itself to emit scattered light, some of which scatters at a higher frequency $(f+\Delta f)$ than the incident light frequency $(f)$, and some of which scatters at a lower frequency $(f-\Delta f)$. The $\Delta f$ represents the change in frequency (sometimes called the frequency shift) produced by Raman scattering.

In summary, when incident light strikes a specimen, the scattered light includes Rayleigh-scattered light at the same frequency $(f)$ as the incident light, higher frequency $(f+\Delta f)$ Raman-scattered light, and lower-frequency $(f-\Delta f)$ Raman-scattered light.

Intensity Depends on the Specimen

Because Raman-scattered light is produced by molecular vibrations within the specimen, the intensity of the Raman-scattered light varies depending upon the type of specimen being viewed. For example, a specimen of blood cells may produce high-intensity Raman-scattered light, while a specimen of skin cells may produce very low-intensity Raman-scattered light.

Raman scattering is used in a variety of spectroscopy systems to study the interaction between a sample and certain types of incident light. The fact that Raman scattering varies depending on the specimen, however, has limited its direct use in the field of microscopy. Although the phenomenon of light scattering is present whenever light strikes a specimen, none of the microscopy systems available today are configured to fully harness the resolving power of Raman scattering.

Thus, there is a need in the art for a microscopy system that takes full advantage of the Raman scattering phenomenon as a source of illuminating a specimen.

There is a related need for a system for relaying and capturing the images produced by such a microscope. There is yet another related need in the art for producing and adapting the types of incident light best suited for provoking Raman scattering in a biological specimen.

There is also a need in the art for a direct-view, optical microscope with a higher resolution and magnification than is currently available.

There is further a need for an optical microscope that provides a real-time image of living biological materials, including cells and intracellular structures. There is a related need for a microscope that permits observation by the human eye and recording by readily-available photomicrographic and video equipment.

There is also a need to provide a system and method for viewing living biological specimens in their natural state, without interference from the artifacts of specimen preparation, without destroying or altering sensitive biochemical characteristics, and without killing the specimen.

There is still further a need for a high-resolution microscope that is less expensive, easy to operate, requires little or no specimen preparation, and is relatively portable and small enough for use in the field.

**Summary of the Invention**

The above and other needs are met by the present invention which, stated generally, provides a direct-view optical microscope system that uses high-energy light from a phenomenon known as non-resonant Raman scattering to illuminate a living biological specimen.

In one aspect of the present invention, a microscope system for observing a specimen includes an optical microscope, a light source, a darkfield condenser to focus the light on the specimen, and a compound relay lens connected to the eyepiece of the microscope. The light source is ultraviolet in one embodiment. The system may also include an adapter positioned between the light source and the microscope to align the light. The system may also include a camera and a computer.

The compound relay lens of the present invention includes two relay lenses connected together to provide higher magnification than a single relay lens alone.

In another aspect, the invention provides of method of provoking enough light scattering to illuminate a specimen in an optical microscope system. The method includes illuminating a lamp that emits ultraviolet light, focusing the ultraviolet light upon the specimen using a darkfield condenser, and then magnifying the image of said specimen using said compound relay lens. The method may further include adapting the ultraviolet light for use in the microscope by positioning an adapter between the lamp and the darkfield condenser.

The method may also include the double oil immersion technique, which includes the steps of placing a drop of oil on the underside center of the slide on which the specimen rests, positioning the slide on the center of the darkfield condenser, placing a drop of oil on the top center of the cover glass, and then raising the darkfield condenser until the oil on the top of said cover glass contacts the objective lens.

In another aspect of the present invention, a microscope system is provided for illuminating and observing a specimen with scattered light from a combined light source. This system includes an optical microscope, a first light wave traveling at a first frequency, a second light wave traveling at a second frequency, an optical combiner to combine the two light waves into one, and a darkfield condenser. The combined light wave includes an additive light wave traveling at an additive frequency and a subtractive light wave traveling at a subtractive frequency. The darkfield condenser focuses the combined light upon the specimen such that the additive and subtractive light waves provoke scattered light.

In one embodiment of the two-light system, the first light wave is produced by a first light filtering system that includes a first light source emitting an unrefined light wave, a first filter, and a first filter controller. The filter controller sends a first control signal to the first filter based upon the desired frequency. The first filter then refines the unrefined light wave into a first light wave traveling at a first frequency. The second light wave is produced by a similar second light filtering system.

The two-light system may also include a compound relay lens, a camera, and a computer. In one embodiment, the two-light system includes an optical combiner. According to the present invention, the optical combiner includes a chamber, a casing enclosing said chamber and including several input ports and an output port, and a prism assembly configured to combine two incoming light waves into a single, combined light wave and project it through the output port.

In another aspect of the two-light system of the present invention, a system for producing the first and second light waves includes a dual-channel filter and a dual-frequency filter controller. The filter controller is configured to send a primary and a secondary control signal to the filter. The dual-channel filter broadcasts the first light wave on a first channel in response to the primary control signal and, in an alternating fashion, broadcasts the second light wave on a second channel in response to the secondary control signal.

In one embodiment, each control signal produces a corresponding acoustic wave inside the dual-channel filter. The first acoustic wave interacting with the unrefined light wave produces the first light wave, and the second acoustic wave interacting with the unrefined light wave produces the second light wave.

In another embodiment, the dual-frequency filter controller includes a primary radio frequency synthesizer, a secondary radio frequency synthesizer, and a driver connecting both synthesizers to the dual-channel filter. Each radio frequency synthesizer is configured to synthesize and send a control signal via the driver to the dual-channel filter.

In another aspect of the present invention, an optical combiner for combining two light waves to produce a single combined light wave includes a chamber, a casing enclosing said chamber and including several input ports and an output port, and a prism assembly configured to combine two incoming light waves into a single, combined light wave and project it through the output port.

In one embodiment, the optical combiner also includes a beam expander connected to each input port designated for light waves emitted by a laser. The beam expander focuses and collimates each incoming laser beam before it reaches the prism.

In an alternative embodiment, the optical combiner is capable of combining a laser light wave and an ultraviolet light wave. The optical combiner is also capable of receiving a single light wave entering through any one of the input ports, and projecting the single light wave through the output port.

In another aspect of the present invention, a method of modulating the combinatory phenomenon to illuminate and view a specimen in an optical microscope system with a combined light includes the steps of filtering a first unrefined light wave to produce a first light wave traveling at a first frequency, filtering a second unrefined light wave to produce a second light wave traveling at a second frequency, combining the light waves into a combined light wave, condensing the combined light, and focusing the combined light upon the specimen. The combined light wave includes an additive light wave traveling at an additive frequency and a subtractive light wave traveling at a subtractive frequency.

The method may also include placing a lower oil drop on the underside center of the slide, positioning the slide on the center of the darkfield condenser, placing an upper oil drop on the top center of the cover glass, and raising the darkfield condenser until the upper oil drop contacts the objective lens of the microscope.

Thus, it is an object of the present invention to provide a microscopy system that takes full advantage of the Raman light scattering phenomenon as a source of illuminating a specimen. It is a related object of the present invention to effectively relay the images captured by such a microscope system for maximum magnification.

It is also an object of the present invention to produce the types of incident light best suited for provoking light scattering in a biological specimen.

It is a further object of the present invention to provide an optical microscope that provides a real-time image of living biological materials, including cells and intracellular structures, that permits direct observation by the human eye, and that facilitates recording by readily-available photomicrographic and video equipment.

It is another object of the present invention to provide a system and method for viewing living biological specimens in their natural state, without interference from the artifacts of specimen preparation, without destroying or altering sensitive biochemical characteristics, and without killing the specimen.

It is also an object of the present invention to provide a fine-resolution, high-magnification microscope that is less expensive, easier to operate, more portable, and less labor-intensive in terms of specimen preparation than ultraviolet, electron, or other types of microscopes.

These and other objects are accomplished by the apparatus, method, and system disclosed and will become apparent from the following detailed description of one preferred embodiment in conjunction with the accompanying drawings.

**Brief Description of the Drawing**

Fig.1 is a diagrammatic side view of a microscope system according to an embodiment of the present invention.

**Fig. 2** is a diagrammatic side view of a compound relay lens according to an embodiment of the present invention.

**Fig. 3** is a detailed view of the incident light as it passes through a darkfield condenser, strikes a specimen, and enters an optical microscope, according to an embodiment of the present invention.

**Fig. 4** is an overhead schematic view of a microscope system according to an embodiment of the present invention.

**Fig. 5** is an overhead schematic view of the light waves passing through an optical combiner and entering a microscope, according to an embodiment of the present invention.

**Fig. 6** is a graphical representation of the electromagnetic spectrum.

**Fig. 7** is an overhead schematic view of an embodiment of the present invention that includes a dual-frequency acousto-optic filter controller.

**Fig. 8** is a detailed view of the combined light wave as it passes through a darkfield condenser, strikes a specimen, and enters an optical microscope, according to an embodiment of the present invention.

**Fig. 9** is a photomicrograph of a diatom illuminated by an embodiment of the microscope system of the present invention, compared to diatom images in **Figs. 9a** and **9b** obtained by other microscopes.

**Figs. 10a, 10b,** and **10c** are photomicrographs of a micrometer, an optical gage, and a carbon grating illuminated by an embodiment of the microscope system of the present invention.

**Fig. 11** is a perspective view of one embodiment of the microscope system according to the present invention.

**Figs. 12** and **13** are photomicrographs of blood cells illuminated by an embodiment of the microscope system of the present invention.

**Detailed Description**

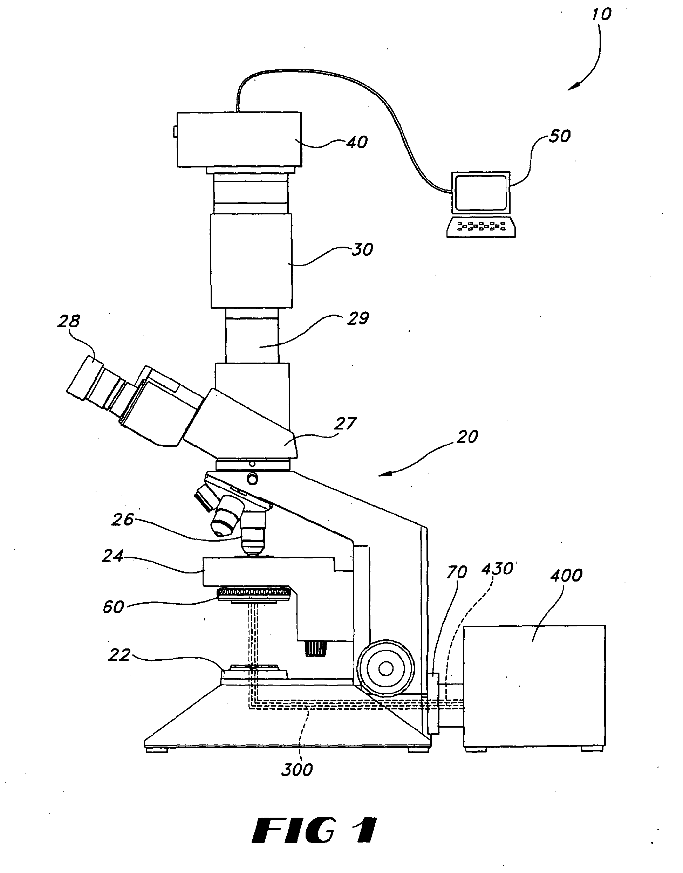

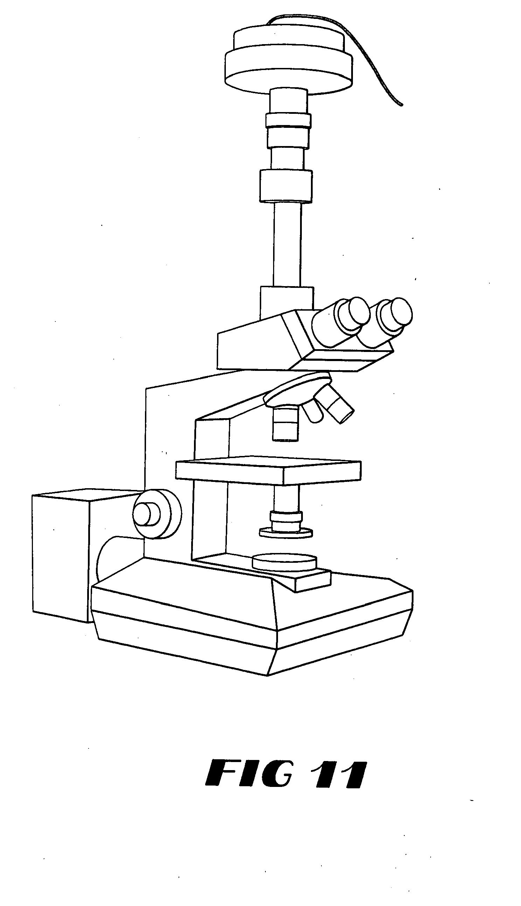

Reference is now made to the drawing figures, in which like numerals refer to like elements throughout the several views. **Fig. 1** shows one embodiment of an optical microscope system **10** according to the present invention. **(Fig. 11** is a perspective view of one embodiment of the system **10).** The system **10** shown in **Fig. 1** includes a first light source **400,** an adapter **70,** a darkfield condenser **60,** a direct-view optical microscope **20,** a compound relay lens **30,** a camera **40,** and a computer **50.** The first light source **400** emits a first light **430** which is called the incident light **300** once it enters the microscope **20.**

A direct-view optical microscope **20** generally includes a base, a field diaphragm **22,** a field condenser such as the darkfield condenser **60** shown, a stage **24** upon which a specimen may be placed, at least one objective lens **26,** and at least one eyepiece for viewing or otherwise receiving the image captured by the objective lens **26.** The term eyepiece includes a broad range of viewing devices beyond those which involve or are intended for the human eye. Light enters the objective lens **26** and travels into the trinocular head **27,** which comprises an ocular eyepiece pair **28** for viewing with the eye and an upwardly-directed projection eyepiece **29.**

The Compound Relay Lens

In one aspect of the inventive system **10** of the present invention, a compound relay lens **30** is added to the microscope **20** to magnify the image before it enters the camera **40,** as shown in **Fig. 1.** A computer **50** receives the image.

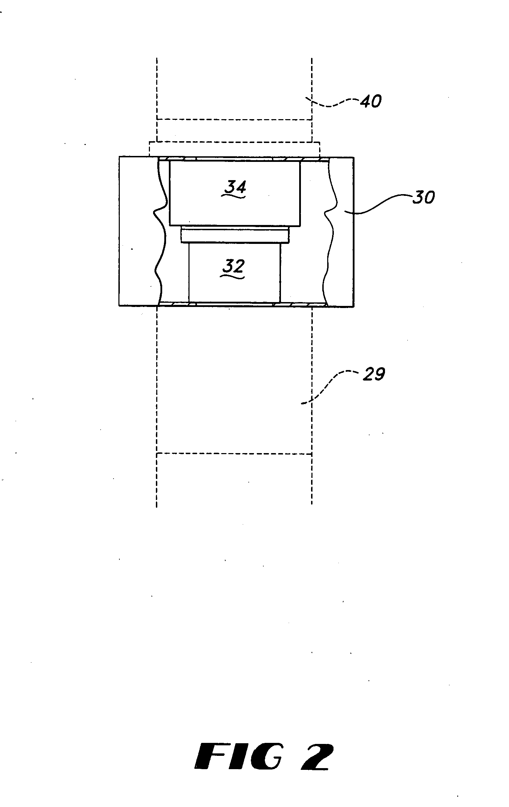

A closer, schematic view of the compound relay lens **30** is shown in **Fig. 2.** The compound relay lens **30** generally includes a first relay lens **32** and a second relay lens **34.** In one embodiment, the first relay lens **32** is a commercially-available objective lens having a cylindrical body and a C-type mount. The second relay lens **34** is a commercially-available relay lens. In a preferred embodiment, the first relay lens **32** has a numerical aperture of 0.65 and a magnification power of 40X, such as the Olympus model A40X objective lens. The second relay lens **34** has a magnification power of 10X, such as the Edmund model L37-820 relay lens. It should be understood that the compound relay lens **30** of the present invention contemplates the use of other types of lenses in combination with one another to produce an increased magnification of the image as it exits any of the eyepieces of the microscope **20.** The combination of these lenses **32, 34** provides greater magnification than either lens would provide alone.

The Light Illuminating the Specimen

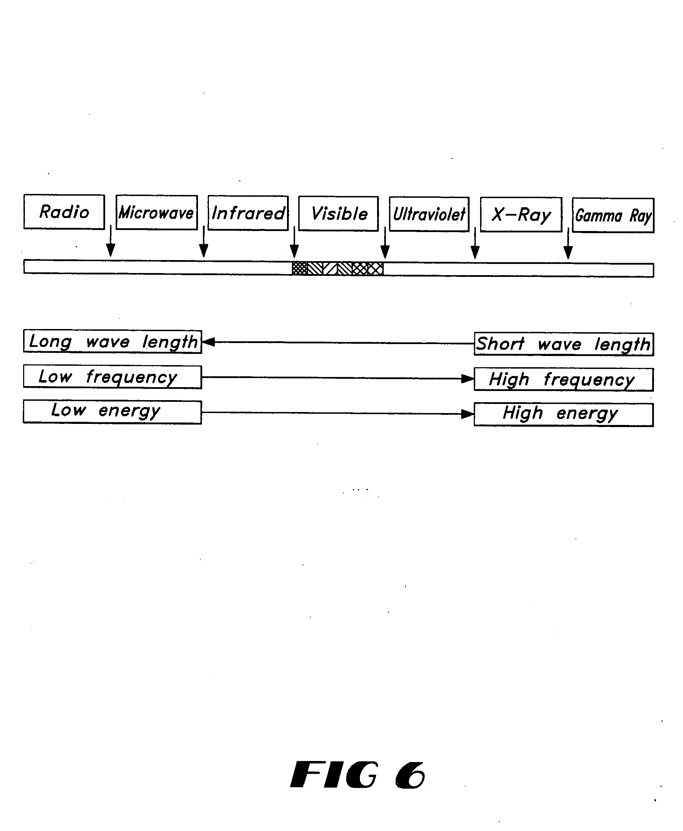

In the system **10** as shown in **Fig. 1,** a first light source **400** is used. In one embodiment, the first light source **400** is an ultraviolet light source **100,** which emits a first light **430** having a frequency in the ultraviolet range of the electromagnetic spectrum (see **Fig. 6).** As depicted in **Fig. 1,** the first light **430** is called the incident light **300** once it enters the microscope **20.**

When an ultraviolet light source **100** is used, the system **10** includes an adapter **70** which acts as an interface between the light source **100** and the visible-light optical microscope **20.** The adapter **70** may include an enclosure such as a cylinder, with polished interior walls, and is configured to align the ultraviolet light source **100** with the entrance port of the microscope **20.**

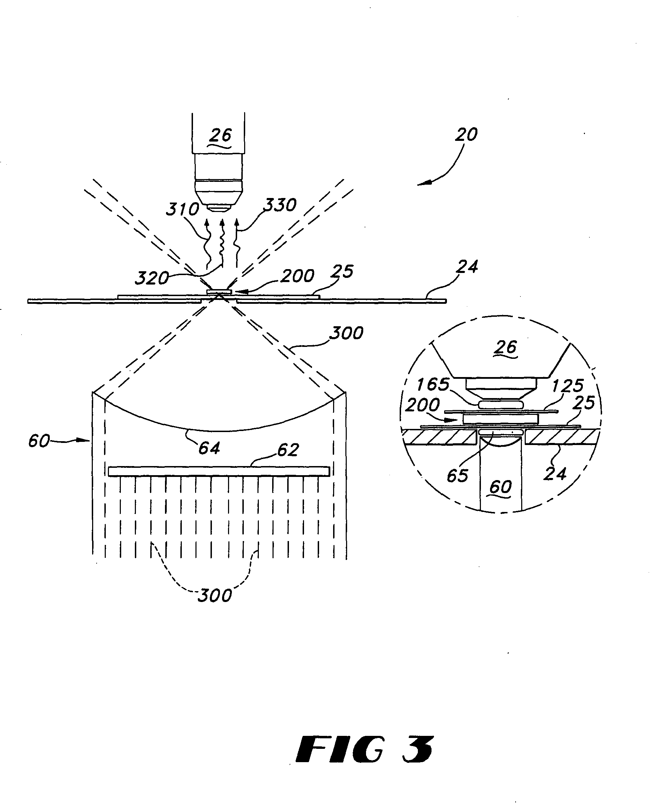

**Fig. 3** provides a closer view of the stage **24** of the microscope **20,** where the specimen **200** sits upon a slide **25.** The ultraviolet first light **430** (now referred to as the incident light **300)** enters the darkfield condenser **60** of the microscope **20.** Each darkfield condenser **60** has a numerical aperture value **NA,** which indicates the angle at which light exits the condenser **60.** A Naessens Darkfield Condenser having a numerical aperture **NA** of 1.41 produces excellent results, although other darkfield condensers may be used.

The darkfield condenser **60** generally includes an annular stop **62** and a condenser lens **64.** In general, a darkfield condenser **60** directs the incident light **300** toward the specimen **200** at an angle that prevents most of the incident light **300** from entering the objective lens **26** of the microscope **20.** The annular stop **62** is shaped like a disc and centrally mounted. Understanding the flow of light actually occurs in three dimensions, a hollow cylinder of light passes around the edges of the annular stop **62** and strikes the condenser lens **64,** which bends the light toward the specimen **200** at an angle indicated by the numerical aperture **NA.** The incident light **300** exiting the condenser lens **64** is shaped like a hollow cone. By centering and adjusting the vertical position of the condenser **60,** the cone of light can be positioned and focused such that its vertex strikes the specimen **200.**

Scattered light is produced when the darkfield condenser **60** focuses the incident light **300** directly on the specimen **200.** When the incident light **300** strikes the specimen **200,** most of the light passes through and continues in its original direction, but a small fraction of the light is scattered in other directions. It is primarily the scattered light that enters the objective lens **26** of the microscope **20.**

The scattered light, as shown in **Fig. 3,** includes a Rayleigh component **310,** a high-frequency Raman component **320,** and a low-frequency Raman component **330.** The Rayleigh-scattered light **310** is emitted at the same frequency **(f)** as the incident light **300.** The high-frequency Raman-scattered light **320** is emitted at a higher frequency **(f+$\Delta$f).** The lower-frequency Raman-scattered light **330** is emitted at a lower frequency **(f-$\Delta$f).**

The microscope system **10** shown in **Fig. 1** is designed to take advantage of the high-energy light produced by Raman scattering **320** and use it to illuminate the specimen **200.** It should be understood that types of light other than ultraviolet may be used in the system **10** of the present invention to excite Raman scattering to illuminate a specimen **200.**

The Method

The method of using the microscope system **10** of the present invention produces sufficient scattered light **310, 320, 330** to illuminate a living biological specimen. An ultraviolet light enters the microscope **20** through an adapter **70** and is focused directly upon the specimen **200** by a darkfield condenser **60.** The resulting image is magnified by a compound relay lens **30** and transmitted to a camera **40** and a computer **50,** where the image may be further refined.

One method of using the system **10** includes the general steps of illuminating an ultraviolet light source **100** such as a mercury lamp, adapting the ultraviolet light for use in a visible-light microscope **20**, and focusing the incident light **300** using a darkfield condenser **60** to provoke Raman-type light scattering to illuminate a living biological specimen **200**. The method further includes magnifying the image using a compound relay lens **30** positioned between the microscope **20** and the camera **40**.

In a preferred embodiment, the method of focusing the incident light **300** with the darkfield condenser **60** further includes a technique known as double oil immersion to enhance performance. A low-viscosity, low-fluorescence immersion oil is preferable. Preferably, a very thin cover glass **125** is positioned on top of the specimen **200**, such that the specimen is sandwiched between the slide **25** and the cover glass **125**.

The double oil immersion technique includes placing a drop of oil on the underside of the slide **25** and a drop of oil on the center of the cover glass **125**. When the slide **25** is placed on the microscope stage **24**, the oil on the underside will make immediate optical contact with the condenser **60**. When the stage **24** is carefully raised until the oil on the top of cover glass **125** makes contact with the objective lens **26**, all optical contacts will occur simultaneously and the specimen **200** will be illuminated.

In this position, as shown in the inset portion of **Fig. 3**, only the width of the lower oil drop **65** separates the condenser **60** from the slide **25** as it rests upon the stage **24** of the microscope **20**. On the upper side, only the width of the upper oil drop **165** separates the cover glass **125** over the specimen **200** from the objective lens **26**.

The Energy of Scattered Light

The higher frequency **(f+△f)** Raman-scattered light waves **320** possess more energy than the incident light **300**. Referring briefly to **Fig. 6**, the electromagnetic spectrum, it can be appreciated that higher-frequency, shorter-wavelength light waves possess higher energy. Because higher-energy light waves generally improve the resolution **D** of a microscope system **10**, it is desirable to provoke a high amount of high-energy Raman-scattered light **320**.

The intensity of Raman-scattered light **320**, however, is about one-thousandth the intensity of Rayleigh-scattered light **310**. Accordingly, it takes a very powerful (high energy and high frequency) light source to produce enough Raman-scattered light **320** to illuminate a specimen. Unfortunately, using a powerful light source also increases the amount of Rayleigh-scattered light **310**, which can overpower and interfere with the Raman-scattered light **320**.

Combining Two Light Sources

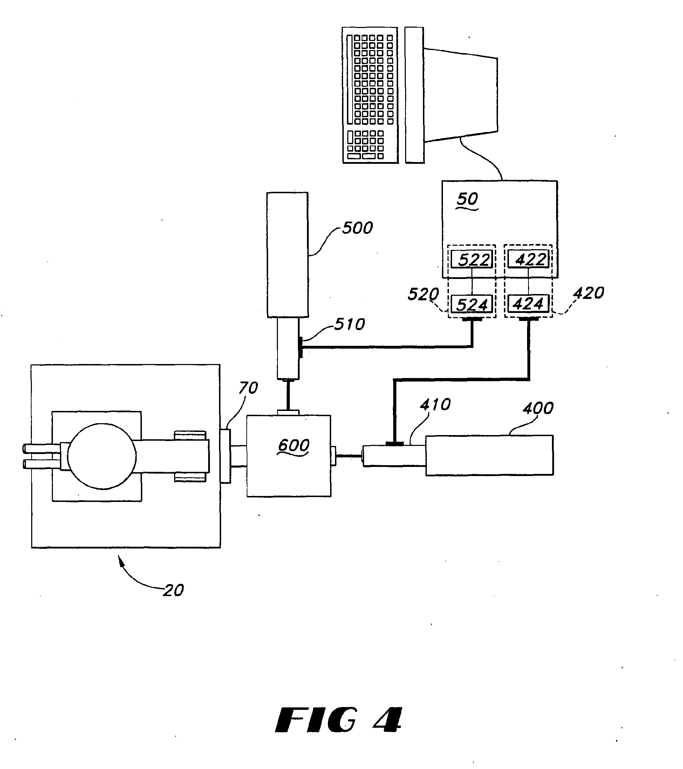

In another embodiment of the system **10** of the present invention, a method and apparatus is provided for maximizing Raman-type scattering while minimizing the interfering effects of Rayleigh-type scattering. In this embodiment, two light sources are combined, as shown in **Fig. 4**, to produce a combinatory phenomenon. The frequency of each light source can be adjusted to maximize the intensity of the Raman-scattered light **320** produced by the particular specimen **200** being viewed.

For example, although a specimen **200** of skin cells may produce a limited amount of Raman-scattered light **320** when illuminated by a single ultraviolet light source **100**, using two adjustable light sources **400, 500** can increase the amount and intensity of Raman-scattered light **320** produced and, thus, increase the resolution **D** of the microscope system **10**.

Referring to **Fig. 4**, a schematic view of this embodiment of the system **10** is depicted. The microscope system **10** includes a first light source **400**, a second light source **500**, an optical combiner **600**, an adapter **70**, and a direct-view optical microscope **20**.

The first light source **400** is filtered by a first acousto-optic tunable filter **410** which is controlled by a first filter controller **420**, which may be housed in a computer **50**. Similarly, the second light source **500** is filtered by a second acousto-optic tunable filter **510** which is controlled by a second filter controller **520**, which may be housed in a computer **50**.

In one configuration, both the first and second light sources **400, 500** are lasers. The light emitted by a laser is well-suited to being filtered to a single frequency, and also well-suited for transmission using fiber optic cable. The laser may be an Argon-ion or Krypton-ion laser such as are available from Omnichrome Corporation, although other types of laser sources may be used.

The Acousto-Optic Tunable Filter (AOTF)

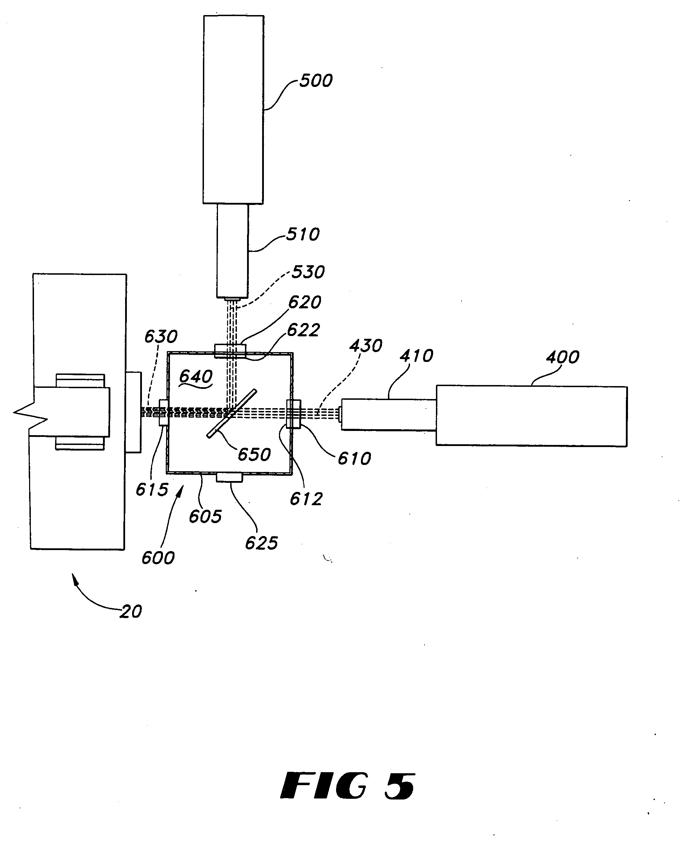

Referring to the schematic light wave diagram in **Fig. 5**, the first and second tunable filters **410, 510** are used to filter the light from the light sources **400, 500** and produce monochromatic (single-color, single-frequency) light waves **430, 530**. The first light **430** travels at a first frequency $f_1$ and has a corresponding first wavelength $L_1$. Similarly, the second light **530** travels at a second frequency $f_2$ and has a corresponding second wavelength $L_2$. The corresponding frequencies $f_1$, $f_2$ and wavelengths $L_1$, $L_2$ may be readily calculated using Equation One (frequency equals the speed of light divided by the wavelength).

A first acousto-optic tunable filter **410** (AOTF **410**) is used in the system **10** of the present invention to filter a light source **400**, typically a laser beam, so that it emits a single-frequency light **430**. The acousto-optic tunable filters **410, 510** may use a Tellurium Dioxide crystal and a transducer, and may be configured specifically to filter light from a laser, such as the fiber-pigtailed laser acousto-optic tunable filter, model TEAF 3-0.45-65-1FP, manufactured by Brimrose Corporation of America. It should be understood, however, that any device capable of receiving a light wave and filtering it into a single-frequency light may be used as the AOTF **410, 510.**

The first AOTF **410** uses an acoustic wave to shift or change the frequency of the light waves in the laser beam from the first light source **400.** The second AOTF **510** operates in a similar manner upon the second light source **500.** The acoustic wave acts like a filter, interacting with the optical light waves and separating a single frequency of light from all the others. By varying the frequency of the acoustic wave, the frequency of the separated light can be varied. The frequency of the acoustic wave produced in the AOTF **410** is controlled electronically by an AOTF controller **420.**

The Acousto-Optic Tunable Filter (AOTF) Controller

As shown in **Fig. 4,** the first AOTF controller **420** includes a first DDS driver **424** and a first RF synthesizer card **422** inside computer **50.** The first DDS (Direct Digital RF Synthesizer) driver **424** may be a self-contained unit containing an RF (radio frequency) amplifier and its own power supply. The first DDS driver **424** acts as an interface between the first RF synthesizer card **422** and the first AOTF **410.**

The first RF synthesizer card **422** includes a DDS module which synthesizes and sends a first radio frequency control signal **426** via the first DDS driver **424** to the first AOTF **410.** The DDS module may cooperate with computer software inside the computer **50** to synthesize and send a particular first radio frequency control signal **426.**

Similarly, the second AOTF controller **520** includes a second DDS driver **524** and a second RF synthesizer card **522** inside computer **50.** The second DDS (Direct Digital RF Synthesizer) driver **524** may be a self-contained unit containing an RF (radio frequency) amplifier and its own power supply. The second DDS driver **524** acts as an interface between the second RF synthesizer card **522** and the second AOTF **510.**

The second RF synthesizer card **522** includes a DDS module which synthesizes and sends a second radio frequency control signal **526** via the second DDS driver **524** to the second AOTF **510.** The DDS module may cooperate with computer software inside the computer **50** to synthesize and send a particular second radio frequency control signal **526.**

The AOTF controllers **420, 520** may be two-channel units such as the acousto-optic tunable filter controller, model VFI-145-70-DDS-A-C2-X, manufactured by Brimrose Corporation of America. It should be understood, however, that any device capable of controlling a device that receives and filters light into a single-frequency light wave may be used as the AOTF controller **420, 520.**

The first and second RF control signals **426, 526** are sent by the first and second AOTF controllers **420, 520** to the first and second acousto-optic tunable filters **410, 510.** The frequency of the RF control signal **426, 526** determines the frequency of the acoustic wave which is used inside each AOTF **410, 510** to filter the light emitted by each light source **400, 500** into a single-frequency light wave **430, 530.**

The Optical T-Combiner

In this embodiment where two light sources **400, 500** are used, the system **10** includes an optical combiner **600** specially designed to combine the lights **430, 530** from two light sources, as shown in **Fig. 5.** The light sources may be any two of the following: a first light source **400,** preferably a laser; a second light source **500,** also preferably a laser; and an ultraviolet light source **100.** The combiner **600** operates somewhat like a tee connector that might be used in other applications, so it is sometimes referred to as a T-combiner. The combiner **600** preferably includes multiple ports with SMA connectors to receive and transmit the light waves. SMA indicates a Sub-Miniature Type A fiber optic connector.

The combiner **600** of the present invention generally includes a chamber **640** enclosed within a casing **605.** A quartz prism **650** inside the chamber **640** combines the two incoming light waves **430, 530.** The casing **605** includes three input ports **610, 620, 625** and one output port **615** with SMA connectors. The first and second input ports **610, 620,** respectively, are designed to accept input from laser light sources, and a third input port **625** is designed to accept ultraviolet light. With three input ports **610, 620, 625,** the combiner **600** is capable of combining any two types of light. Alternative, the combiner **500** will transmit a single light source through the prism **650.** The combiner **600** is also capable of transmitting two lights that may enter through a single port, such as those produced by a dual-channel tunable filter.

Other port configurations and prism types are contemplated and may be used in the combiner **600,** according to the elements present in a particular system, provided the combiner **600** functions to combine two light waves into a single combined light wave **630** capable of provoking the combinatory phenomenon discussed herein.

Each laser input port **610, 620** includes a laser beam expander **612, 622** to focus and collimate (make parallel) the laser beam. A laser beam expander **612, 622** is designed to decrease the laser's beam spot size at large distances. The expander operates like a reverse Galilean telescope, providing a certain angular magnification factor called the expander power. The beam diameter is first increased in size by the expander power. Then, the beam divergence is reduced by the same power. This combination yields a beam that is not only larger, but also one that is highly collimated. The result is an expanded laser beam that produces a smaller beam spot at a large distance when compared to the laser alone. The expanded laser beam also produces smaller beam spot sizes when used in combination with additional focusing optics, a feature that facilitates focusing optimization.

The quartz prism **650** of the optical combiner **600** merges the light waves **430, 530** from two light sources **400, 500,** resulting in a combined light wave **630** that behaves differently from any other single light source. More specifically, the combined light wave **630,** after it passes through the darkfield condenser **60** and strikes the specimen **200,** will produce a combinatory phenomenon.

The Combinatory Phenomenon

The two-source embodiment of the system **10** of the present invention uses the powerful effects of the combinatory phenomenon to improve the resolution **D** of the microscope **20.** When two lights **430, 530** are combined to form a single combined light **630,** the interaction of the two light waves **430, 530** traveling at frequencies $f_1$, $f_2$ produces two new combinatory frequencies; namely, a combined additive frequency **Fa** and a combined subtractive frequency **Fs.** As the terms imply, the additive frequency **Fa** equals $f_1 + f_2$ **and** the subtractive frequency **Fs** equals $f_1 - f_2$. Accordingly, the single combined light **630** includes two light waves **630A, 630S** traveling at two different frequencies, **Fa** and **Fs.**

The light wave **630A** traveling at the additive frequency **Fa** has greater energy, of course, than the light wave **630S** traveling at the subtractive frequency **Fs.** Accordingly, the additive light wave **630A** will produce the most amount of light scattering and the additive frequency **Fa** will determine the resolution or resolving power **D** of the microscope. The resolution **D** of the microscope **20** in the system **10** of the present invention can be calculated using Abbe's formula **(D** equals **La** divided by twice the **NA),** where **La** is the additive wavelength (corresponding to the additive frequency **Fa)** and **NA** is the numerical aperture of the darkfield condenser **60.**

The resolving power **D** of the microscope **20** in the system **10** of the present invention is an estimate because the intensity of the Raman-scattered light **320** produced by a combined light **630** having an additive wavelength **La** is, to some degree, dependent upon the specimen **200** being viewed.

Example

The interaction of two single-frequency lights **430, 530** may be illustrated by an example. A first light **430** having a first wavelength $L_1$ of 440x10$^{-9}$ meters is combined with a second light **530** having a second wavelength $L_2$ of 400x 10$^{-9}$ meters. We can calculate the corresponding frequencies $f_1$, $f_2$ using Equation One (frequency equals the speed of light divided by the wavelength). The first frequency $f_1$ equals 6.81x10$^{14}$ Hz. The second frequency $f_2$ equals 7.49x10$^{14}$Hz.

Combining light at these two frequencies $f_1$, $f_2$ produces a combined light **630** which includes light waves traveling at two different frequencies **Fa, Fs.** Using the frequencies $f_1$, $f_2$ calculated, the additive frequency **Fa** $(f_1 + f_2)$ equals 14.30x10$^{14}$ Hz and the subtractive frequency **Fs** $(f_1 - f_2)$ equals 0.680x10$^{14}$ Hz.

The light waves **630A** traveling at the additive frequency **Fa** of 14.30x10$^{14}$ Hz produce light which is in the ultraviolet range of the electromagnetic spectrum. As shown in **Fig. 6.,** generally, the higher the frequency, the higher the energy. Ultraviolet light has more energy than visible light or light in the very low frequencies such as infrared light, microwaves, and radio waves. The light waves **630S** traveling at the subtractive frequency **Fs** of 0.680x10$^{14}$ Hz produce infrared light, which has a much lower energy than ultraviolet light.

The resolution **D of a** microscope illuminated by the combined light **630** can be calculated using Abbe's formula **(D** equals **La** divided by twice the **NA).** Using the light waves **630A** traveling at the additive frequency **Fa** of 14.30x10$^{14}$ Hz (and its corresponding additive wavelength **La** of 209x10$^{-9}$ meters) and the numerical aperture **NA** of the darkfield condenser (which, in one embodiment of the system **10** is 1.41), the resolving power **D** of the microscope **20** is 74.1x10$^{-9}$ meters (741 Angstroms).

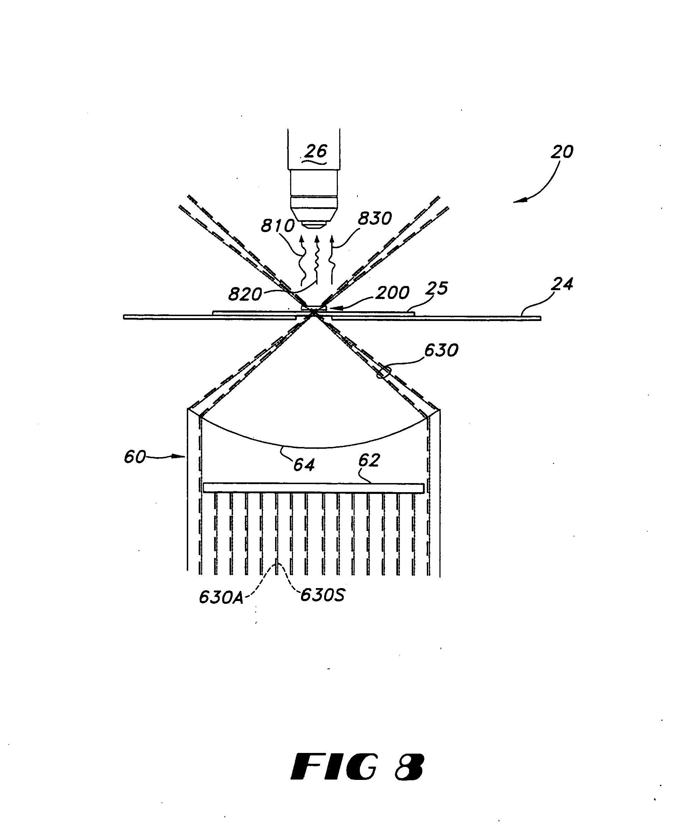

As shown in **Fig. 8,** the scattering of a light source that has undergone the combinatory phenomenon (such as the combined light wave **630)** includes the scattering of both the additive light wave **630A** and the subtractive light wave **630S.** Accordingly, both light waves **630A, 630S** will produce three types of scattered light: a same-frequency **(Fa, Fs)** Rayleigh component, a high-frequency **(Fa+**$\Delta$**f, Fs+**$\Delta$**f)** component, and a lower-frequency **(Fa-**$\Delta$**f, Fs-**$\Delta$**f)** component. The three scattered light components **(Fs, Fs+**$\Delta$**f, Fs-**$\Delta$**f)** of the subtractive light wave **630S** are not shown in Fig. 8 because they possess much less energy than the additive light wave **630A.**

The scattering of the additive light wave **630A,** as shown in **Fig. 8,** includes a combined Rayleigh component **810,** a high-frequency combined Raman component **820,** and a low-frequency combined Raman component **830.** The combined Rayleigh-scattered light **810** is emitted at the same frequency **(Fa)** as the additive light wave **630A.** The combined high-frequency Raman-scattered light **820** is emitted at a higher frequency **(Fa+**$\Delta$**f).** The combined lower-frequency Raman-scattered light 830 is emitted at a lower frequency **(Fa-**$\Delta$**f).**

Modulating Raman-type Scattering of a Combined Light

In the two-light embodiment, the present invention includes a method of modulating or adjusting the intensity of the combined Raman-scattered light **820** when two light waves **430, 530** are combined to produce the combinatory phenomenon. By varying the frequency of the first and second light waves **430, 530,** the intensity of the combined Raman-scattered light **820** can be adjusted to achieve maximum resolving power **D.**

The acousto-optic tunable filters **410, 510** are used to adjust the frequency of the first and second light sources **400, 500,** respectively, to achieve an increase in the intensity of the combined Raman-scattered light **820** emitted by the particular specimen **200** being viewed.

It has been observed that an increase in the intensity of the combined Raman-scattered light **820** results in an increase in resolving power **D.** Also, the use of increased combined light frequency **Fa** necessarily produces a light wave having higher energy. It has also been observed that a high-energy light source produces more of the non-linear and inelastic (Raman) effects of scattered light, which are desirable in the system **10** of the present invention.

It should be noted that the acousto-optic tunable filters **410, 510** may be adjusted to produce a wide variety of light frequencies $f_1$, $f_2$, respectively; any combination of which may be optimal for viewing a particular specimen **200.** Different combinations $f_1$, $f_2$ will produce different combinatory frequencies **Fa, Fs,** different intensities of combined Raman-scattered light **820** and, therefore, different resolving powers **D** for a particular specimen **200.**

It should also be noted that different combinations of light frequencies $f_1$, $f_2$ will produce different relative intensities of combined Rayleigh-scattered light **810** and combined low-energy Raman-scattered light 830, both of which may alter the effective resolving power **D** of the microscope system **10** for a particular specimen **200.**

In another aspect of the present invention, the first and second light sources **400, 500,** as shown in **Fig. 4,** may be of different types including, without limitation, laser, ultraviolet, x-rays, or visible light. Just as different frequency combinations $f_1$, $f_2$ will produce different relative intensities of Raman-scattered light **320,** different types of light sources will produce different results.

In one configuration, the first light source **400** is a laser and the second light source **500** produces ultraviolet light. After being combined in the optical combiner **600,** the combined light **630** enters the microscope **20.** It is theorized that the presence of high-energy harmonics and non-linear waves from the ultraviolet light source will increase the amount and intensity of Raman-scattered light **320,** thereby increasing resolution.

In another configuration, a single laser can be configured using a beam splitter to emit a laser beam into both the first and second acousto-optic tunable filters **410, 510.** Each acousto-optic tunable filter **410, 510** can then filter the laser into two single-wavelength lights **430, 530.**

Two Single-Frequency Light Waves from One Source

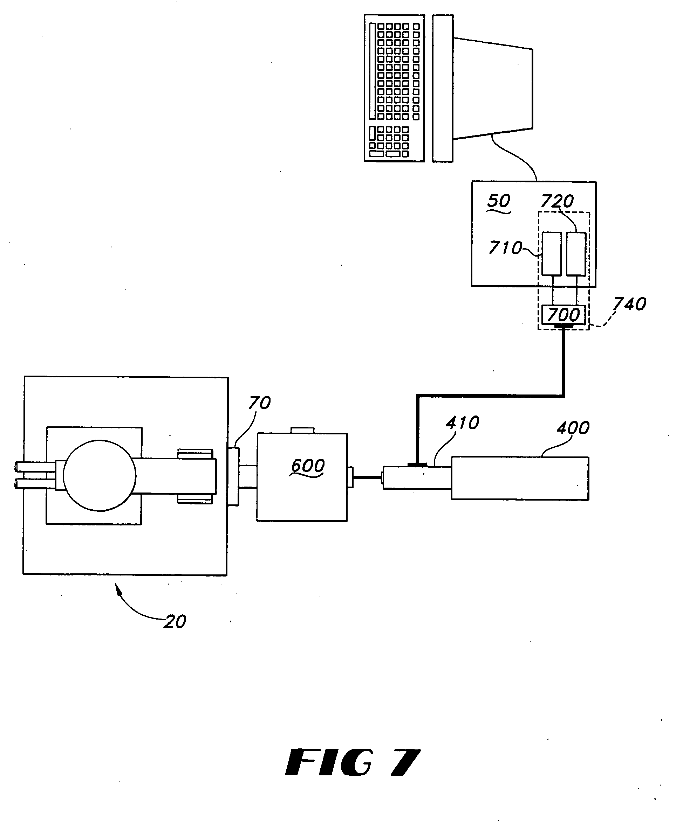

In yet another configuration, shown in **Fig. 7,** a single laser source **400** can provide light waves to the acousto-optic tunable filter **410** that is controlled by a dual-frequency AOTF controller **740.**

The dual-frequency AOTF controller **740** includes a dual-frequency DDS driver **700,** a primary RF synthesizer card **710,** and a secondary RF synthesizer card **720.** The dual-frequency DDS (Direct Digital RF Synthesizer) driver **700** may be a self-contained unit containing an RF (radio frequency) amplifier and its own power supply. The dual-frequency DDS driver **700** acts as an interface between the primary and secondary RF synthesizer cards **710, 720** and the AOTF **410.**

The primary RF synthesizer card **710** includes a DDS module which synthesizes and sends a primary radio frequency control signal **716** via the dual-frequency DDS driver **700** to the AOTF **410.** The DDS module may cooperate with computer software inside the computer **50** to synthesize and send a particular primary radio frequency control signal **716.**

Similarly, the secondary RF synthesizer card **720** includes a DDS module which synthesizes and sends a secondary radio frequency control signal **726** via the dual-frequency DDS driver **700** to the AOTF **410.** The DDS module may cooperate with computer software inside the computer **50** to synthesize and send a particular secondary radio frequency control signal **726.**

The dual-frequency driver **700** sends both control signals **716, 726** to the AOTF **410,** which has two channels. The AOTF **410** filters the incoming light from the laser **400** into two single-frequency light waves **430, 530** and broadcasts one on each channel. In use, the dual-frequency driver **700** sends both control signals **716, 726** by alternating; in other words, by repeatedly switching from one frequency to another.

The dual-frequency driver **700,** however, has a maximum switching speed. The excited states of the observed specimen **200,** likewise, have certain lifetimes. Recall that the combined light **630** striking the specimen **200** causes excitation in the molecules of the specimen **200.** The excited states produce the scattered light used to illuminate the specimen **200** in the microscope **20.** If the lifetime of each of the excited states of the specimen **200** is longer than the maximum switching speed, then the dual-frequency driver **700** will operate successfully to produce both light waves **430, 530.** For a specimen **200** having a very short excitation state, a second AOTF **410** and controller **420** may be needed. Alternatively, a dual-frequency driver **700** with a higher maximum switching speed could be used.

Experimental Results

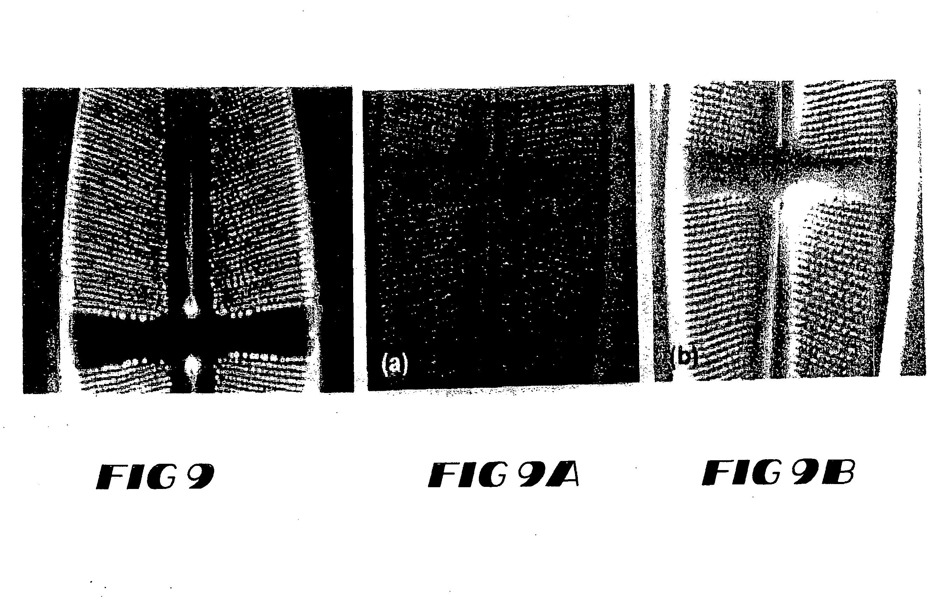

**Fig. 9** shows the intricate lattice of a diatom illuminated by an embodiment of the microscope system **10** of the present invention. A diatom is a tiny, unicellular marine organism that has a silica-impregnated outer cell wall sometimes called a lattice. Diatom lattices are often used in microscopy to study and compare systems of illumination and magnification.

The diatom lattice shown in **Fig. 9** was illuminated and photographed using an embodiment of the microscope system **10** of the present invention. The system **10** used to illuminate and photograph the diatom in **Fig. 9** included a 100-watt mercury lamp to produce an ultraviolet light source **100** and included a Naessens darkfield condenser **60** having a numerical aperture **NA** of 1.41 and a 100X objective lens **26.**

Comparing the detail and texture of the diatom lattice in **Fig. 9** to the images in **Figs. 9a** and **9b** illustrates the power of the system **10** of the present invention. **Fig. 9a** is a still photomicrograph taken of a video image of a similar diatom. The image in **Fig. 9b** was enhanced using the gain boost of a Vidicon tube camera.

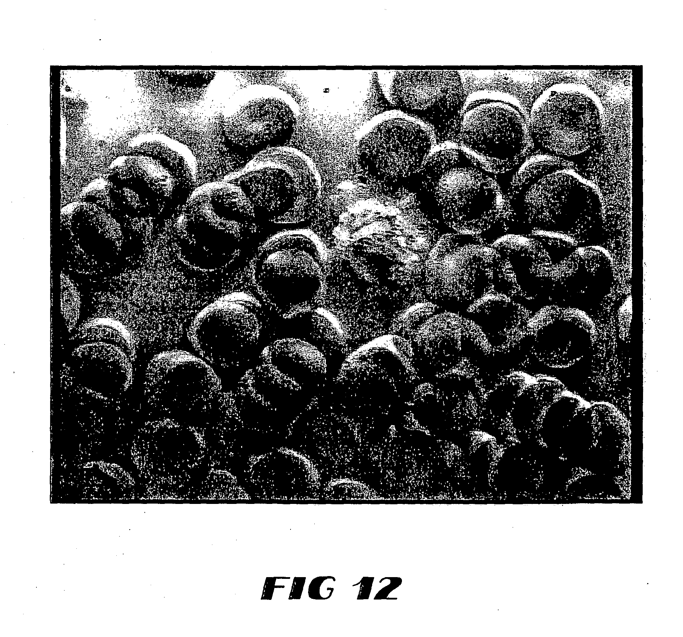

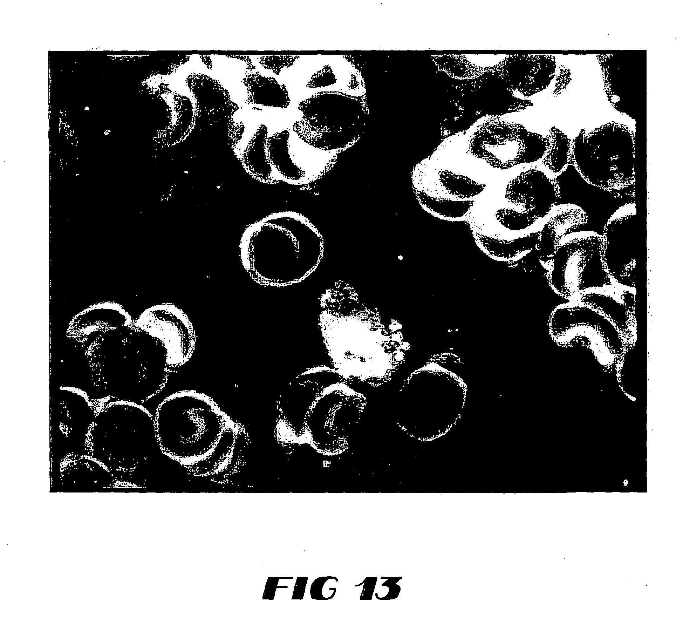

**Figs. 12** and **13** are photomicrographs of living blood cells illuminated by an embodiment of the microscope system of the present invention. Each sample was photographed approximately two minutes after the blood was drawn. Blood cells of different types, red and white, can be seen in motion, interacting with one another.

### Resolution

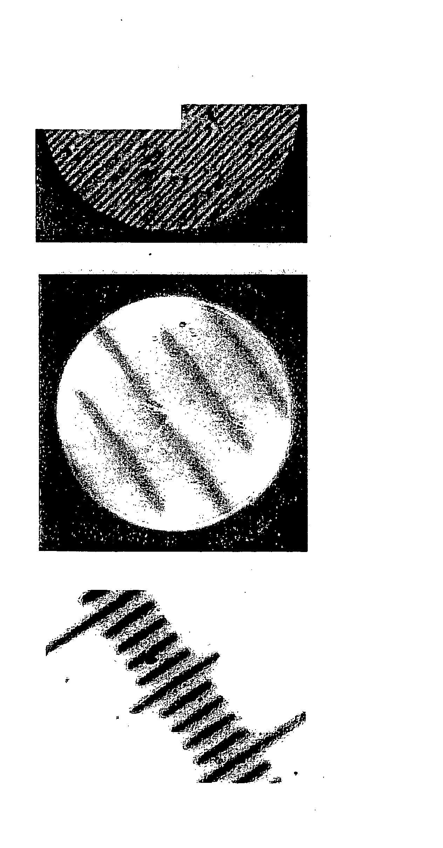

Micrometers, optical gages, and carbon grating samples are used in microscopy to evaluate, calibrate, and illustrate the resolving power of microscopes. The system **10** of the present invention obtained the images in **Figs. 10a, 10b,** and **10c. Fig. 10a** is a photomicrograph of a micrometer with divisions 2.0 microns apart at a magnification of approximately 4,000X. **Fig. 10b** is a photomicrograph of an optical gage with divisions also 2.0 microns apart at a magnification of approximately 7,500X. **Fig. 10c** is a photomicrograph of a carbon grating sample having equidistant and parallel lines of carbon spaced 0.46 microns apart.

The microscope system **10** of the present invention may find application in numerous fields of scientific study and research including, without limitation, microbiology, bacteriology, virology, general biology, clinical hematology, industrial quality control, reproductive sciences, and any of a variety of other fields where observation of a biological specimen is desired.

The microscope system **10** of the present invention provides a direct-view of the specimen **200,** instead of the indirect views offered by ultraviolet and electron microscopes. The fact that the system **10** includes a direct-view optical microscope **20** allows real-time observation with the human eye of biochemical events taking place at a microscopic, often intracellular level.

The system **10** takes full advantage of the Raman scattering phenomenon as a source of illuminating the specimen **200,** providing a finer resolution and a higher magnification than is currently available from any optical microscope.

The system **10** provides a real-time image of living biological materials, including cells and intracellular structures. Very little specimen preparation is required, leaving living biological specimens unaltered and without artifacts. The system **10** allows observation of living specimens without destroying or altering their biochemical characteristics, and without killing the specimen.

The system **10** also provides a low-cost, low-expertise alternative to the more expensive and complex ultraviolet and electron microscope systems. The system **10** may also be made portable for field operation.

Although the invention has been described in terms of a preferred embodiment, it will be appreciated by those skilled in the art that additions, substitutions, modifications, and deletions not specifically described may be made without departing from the spirit and scope of the invention.

## Claims

1. A microscope system for observing a specimen, comprising:

   an optical microscope having at least one objective lens and at least one eyepiece;
   a light source emitting an incident light;
   a darkfield condenser positioned to receive said incident light and focus said incident light upon said specimen; and
   a compound relay lens connected to said eyepiece.

2. The system of claim 1, wherein said incident light travels at a frequency in the ultraviolet range of the electromagnetic spectrum.

3. The system of claim 1, further comprising:

   an adapter positioned between said light source and said microscope, said adapter configured to align said incident light.

4. The system of claim 1, further comprising:

   a camera connected to said compound relay lens; and
   a computer in communication with said camera,

5. The system of claim 1, wherein said eyepiece comprises an ocular eyepiece pair and a projection eyepiece, and wherein said compound relay lens is connected to said projection eyepiece.

6. The system of claim 1, wherein said compound relay lens comprises:

   a first relay lens connected to said eyepiece; and
   a second relay lens connected to said first relay lens, said compound relay lens providing higher magnification than a single relay lens alone.

7. A compound relay lens for an optical microscope having at least one eyepiece, comprising:

   a first relay lens connected to said eyepiece; and
   a second relay lens connected to said first relay lens, said compound relay lens providing higher magnification than a single relay lens alone.

8. The compound relay lens of claim 7, wherein said microscope is connected to a photomicrography system having at least one camera, wherein said second relay lens is positioned between said first relay lens and said camera.

9. The compound relay lens of claim 7, wherein said first relay lens has a numerical aperture of at least 0.65 and a magnification power of at least 40 times.

10. The compound relay lens of claim 7, wherein said second relay lens has a magnification power of at least 10 times.

11. A method of provoking light scattering sufficient to illuminate a specimen in an optical microscope system, said system comprising a visible-light microscope having a darkfield condenser, at least one objective lens, and a compound relay lens, said method comprising:

   illuminating a lamp that emits a first light, wherein said first light travels at a frequency in the ultraviolet range of the electromagnetic spectrum;
   focusing said first light upon said specimen using said darkfield condenser; and
   magnifying the image of said specimen using said compound relay lens.

12. The method of claim 11, further comprising:

   adapting said ultraviolet light for use in said microscope by positioning an adapter between said lamp and said darkfield condenser.

13. The method of claim 11, wherein said specimen is placed upon a slide and is covered by a cover glass, said method further comprising:

   placing a lower oil drop on the underside center of said slide;
   positioning said slide on the center of said darkfield condenser;
   placing an upper oil drop on the top center of said cover glass;
   raising said darkfield condenser until said upper oil drop contacts said objective lens.

14. A microscope system for illuminating and observing a specimen with scattered light from a combined light source, said system comprising:

   an optical microscope having at least one objective lens and at least one eyepiece;

   a first light wave traveling at a first frequency;
   a second light wave traveling at a second frequency;
   an optical combiner positioned to receive said first and second light waves and combine said lights into a combined light, said combined light comprising an additive light wave traveling at an additive frequency and a subtractive light wave traveling at a subtractive frequency;
   a darkfield condenser positioned to receive said combined light and focus said combined light upon said specimen such that said additive and subtractive light waves provoke scattered light.

15. The system of claim 14, wherein said first light wave traveling at a first frequency is produced by a first filter system, comprising:

   a first light source emitting a first unrefined light wave;
   a first filter connected to said first light source and configured to receive said first unrefined light wave;
   a first filter controller connected to said first filter, said first filter controller configured to send a first control signal capable of adjusting said first filter such that said first filter refines said first unrefined light wave into said first light wave traveling at said first frequency.

16. The system of claim 14, wherein said second light wave traveling at a second frequency is produced by a second filter system, comprising:

   a second light source emitting a second unrefined light wave;
   a second filter connected to said second light source and configured to receive said second unrefined light wave;
   a second filter controller connected to said second filter, said second filter controller configured to send a second control signal capable of adjusting said second filter such that said second filter refines said second unrefined light wave into said second light wave traveling at said second frequency.

17. The system of claim 14, further comprising a compound relay lens connected to said eyepiece.

18. The system of claim 17, further comprising:

   a camera connected to said compound relay lens; and
   a computer in communication with said camera,

19. The system of claim 17, wherein said eyepiece comprises an ocular eyepiece pair and a projection eyepiece, and wherein said compound relay lens is connected to said projection eyepiece.

20. The system of claim 17, wherein said compound relay lens comprises:

a first relay lens connected to said eyepiece; and a second relay lens connected to said first relay lens, said compound relay lens providing higher magnification than a single relay lens alone.

21. The system of claim 20, wherein said first relay lens has a numerical aperture of at least 0.65 and a magnification power of at least 40 times, and wherein said second relay lens has a magnification power of at least 10 times.

22. The system of claim 14, wherein said optical combiner comprises:

a chamber;
a casing enclosing said chamber, said casing comprising a plurality of input ports and an output port; and
a prism assembly positioned within said chamber, said prism assembly configured to receive said light waves entering through any two of said plurality of input ports, to combine said light waves into said combined light wave, and to project said combined light wave through said output port.

23. A system for producing a first light wave traveling at a first frequency and a second light wave traveling at a second frequency from a single light source emitting an unrefined light wave, said system comprising:

a dual-channel filter configured to receive said unrefined light wave;
a dual-frequency filter controller connected to said dual-channel filter and configured to send a primary and a secondary control signal to said dual-channel filter,
said dual-channel filter configured to broadcast said first light wave on a first channel in response to said primary control signal and, in an alternating fashion, to broadcast said second light wave on a second channel in response to said secondary control signal.

24. The system of claim 23, wherein said primary control signal produces a first acoustic wave within said dual-channel filter, said first acoustic wave interacting with said unrefined light wave to produce said first light wave at said first frequency.

25. The system of claim 23, wherein said secondary control signal produces a second acoustic wave within said dual-channel filter, said second acoustic wave interacting with said unrefined light wave to produce said second light wave at said second frequency.

26. The system of claim 23, wherein said dual-frequency filter controller comprises:

a primary radio frequency synthesizer;
a secondary radio frequency synthesizer; and
a driver connecting both of said primary and secondary radio frequency synthesizers to said dual-channel filter,
said primary radio frequency synthesizer configured to synthesize and send a primary control signal via said driver to said dual-channel filter,
said secondary radio frequency synthesizer configured to synthesize and send a secondary control signal via said driver to said dual-channel filter.

27. An optical combiner for combining two light waves to produce a single combined light wave, said optical combiner comprising:

a chamber;
a casing enclosing said chamber, said casing comprising a plurality of input ports and an output port; and
a prism assembly positioned within said chamber, said prism assembly configured to receive said light waves entering through any two of said plurality of input ports, to combine said light waves into said combined light wave, and to project said combined light wave through said output port.

28. The optical combiner of claim 28, further comprising:

a beam expander connected to a first input port designated for light waves emitted by a laser, said beam expander configured to focus and collimate said light waves, said beam expander positioned between said first input port and said prism.

29. The optical combiner of claim 28, wherein a laser beam is received through a first input port and an ultraviolet light wave is received through a second input port, said combiner further comprising:

a beam expander positioned between said first input port and said prism, said beam expander configured to focus and collimate said laser beam.

30. The optical combiner of claim 28, wherein said prism assembly is further configured to receive a single light wave entering through any one of said plurality of input ports, and project said single light wave through said output port.

**31.** A method of modulating the combinatory phenomenon to illuminate and view a specimen in an optical microscope system with a combined light, said method comprising:

> filtering a first unrefined light wave to produce a first light wave traveling at a first frequency;
> filtering a second unrefined light wave to produce a second light wave traveling at a second frequency;
> combining said first and second light waves to produce said combined light wave, said combined light wave comprising an additive light wave traveling at an additive frequency and a subtractive light wave traveling at a subtractive frequency;
> condensing said combined light wave into the shape of a hollow cone;
> focusing the first vertex of said hollow cone of combined light upon said specimen.

**32.** The method of claim 31, wherein said specimen is placed upon a slide and is covered by a cover glass, said method further comprising:

> placing a lower oil drop on the underside center of said slide;
> positioning said slide on the center of said darkfield condenser;
> placing an upper oil drop on the top center of said cover glass;
> raising said darkfield condenser until said upper oil drop contacts said objective lens.

**FIG 1**

**FIG 2**

**FIG 3**

FIG 4

FIG 5

| Radio | Microwave | Infrared | Visible | Ultraviolet | X-Ray | Gamma Ray |

| Long wave length | ← | Short wave length |
| Low frequency | → | High frequency |
| Low energy | → | High energy |

# FIG 6

**FIG 7**

**FIG 8**

FIG9B

FIG9A

FIG9

EP 1 684 106 A2

FIG 11

FIG 12

FIG 13